# EUROPEAN PATENT SPECIFICATION

(11) **EP 0 466 250 B1**
(45) Date of publication and mention of the grant of the patent: **02.10.1996**
(21) Application number: 91201701.9
(22) Date of filing: 02.07.1991
(51) Int. Cl.: C04B 20/02, B08B 1/02, E01C 19/05, B65G 33/26

(54) **Method for the production of mineral aggregates**
Verfahren zur Herstellung von Mineralzuschlägen
Procédé de fabrication de granulats minéraux

(30) Priority: 11.07.1990 NL 9001579
(43) Date of publication of application: 15.01.1992
(73) Proprietor: PELT & HOOYKAAS B.V., NL-3087 AA Rotterdam (NL)
(72) Inventor: Hooykaas, Carel Willem Jan, NL-3062 BT Rotterdam (NL)
(74) Representative: van der Kloet-Dorleijn, Geertruida W.F., Drs.

(56) References cited:
- EP-A- 0 051 550
- EP-A- 0 353 159
- BE-A- 459 409
- DE-A- 2 713 757
- DE-C- 587 688
- FR-A- 2 566 768
- FR-A- 2 616 420
- GB-A- 621 200
- GB-A- 1 269 344
- GB-A- 1 580 908
- G. HAWLEY: "Condensed Chemical Dictionary", 11th edition, page 447, Van Nostrand Reinhold Co., New York, US

## Description

The invention relates to a method for the production of mineral aggregates in particle form by breaking, screening and removal of dust particles smaller than 63 µm adhering to the particles.

Such a method is known from GB-A-1 580 908 and comprises more specifically the removal of particles smaller than 75 µm. This is obtained by washing the particles of a fine fraction and passing it through a sieve of nominal aperture 75 µm. Such a method is nevertheless not successful for the removal of impurities adhering to the surface of the particles.

The disadvantage of washing is, further, that both the washing water and the sludge formed pollute the environment and cannot therefore simply be thrown away. In the case of secondary raw materials in particular, the washing water is also often heavily polluted through the maximum leaching out of fine particles.

According to the invention this disadvantage is eliminated through removing the dust particles adhering to the mineral aggregates which are smaller than 63 µm using brushing, preferably dry brushing.

The particles are preferably subjected to the brushing in such a way that less than 3% particles smaller than 63 µm, preferably less than 1%, is present.

It is pointed out that mineral aggregates in particle form are normally added to a hardening building material such as asphalt or concrete. These aggregates consist of shingle or broken shingle, but they can also consist of phosphorus slag, steel slag or another mineral material such as, for example, broken concrete, broken mortar or broken asphalt.

The disadvantage of the aggregates used hitherto is, however, that the particles contain a quantity of dust particles in excess of 1%, mostly in excess of 5 to 8%. These dust particles result in the specific surface area of the mineral filling materials in particle form becoming larger, so that when they are used in asphalt or concrete more bitumen or cement is required.

Since, in addition, the quantity of these dust particles varies, the properties of the set, finished product are not always the same, nor are they predictable.

It is pointed out that in most Western European countries regulations are in force under which mineral aggregates used in a hardening building material such as asphalt and concrete must essentially be free of particles smaller than approximately 63 µm.

It is also increasingly common for rubble from the demolition of buildings to be made suitable for re-use by pulverizing it to particles of the size desired for use in asphalt or concrete. This pulverization is often carried out on the demolition site itself. The disadvantage of this is, however, that building material pulverized or otherwise is left behind on the demolition site and can constitute pollution of the environment, in particular the ground water. Although it is known per se that the buildings and the ground of factories can be heavily polluted, it was recently found that the rubble from dwellings can also contain such a concentration of environmentally harmful pollutants that its direct re-use is no longer permitted. In particular, the rubble from chimneys is found to contain an undesirable concentration of polycyclic aromatic hydrocarbons (PAHs).

These hydrocarbons occur in particular during the combustion of coal, heating oil and other crude petroleum products. They are, however, difficult to remove by washing from, for example, the mortar of brickwork and are momentarily collected completely in the screen sand formed by pulverization.

This leads to a large volume of polluted sand, which is therefore not suitable for re-use and requires a large storage capacity. The brushing eliminates this disadvantage and has the additional advantage that no great quantity of polluted washing water is produced.

This brushing preferably takes place dry, but can also be carried out in the presence of a small quantity of water (misting of water) or in the presence of a larger quantity of water. It is, however, also possible first to brush the aggregates dry and then to brush them in the presence of water, or to wash the dry brushed aggregates.

It has thus surprisingly been found that brushing, in particular dry brushing, removes or separates the polycyclic aromatic hydrocarbons adhering to the aggregates to such a degree that the increasingly strict standards for re-use of polluted demolition material can be amply met.

The (dry) brushing of the mineral aggregates also makes it possible to use the separated dust particles as such without any processing, for example as a filler in a suitable composition, or to immobilise them and re-use them in bound form, or to treat this now small stream as chemical waste.

According to a particularly preferred embodiment, this brushing of mineral aggregates is carried out in such a way that these aggregates are in a fluidized state. This prevents fine dust particles which would destroy the removal efficiency of the operation from being formed during the brushing as a result of particles bumping against the wall of the brushing device or bumping against one another. Of course, it is possible for the aggregates to be treated to be moistened beforehand with a water mist, in order to increase the removal efficiency.

Mineral aggregates in particle form, which are obtained as described hereabove, can be used in a hardening building material, such as asphalt or concrete.

It is in this respect observed that in a building material produced by using the present aggregates, the quantity of bitumen or cement to be added is much smaller than was usual hitherto, due to the fact that the aggregates to be added have a much smaller specific surface area. This therefore results in a considerable saving in primary raw materials.

Mineral aggregates whose percentage of particles smaller than 63 µm is 1% or less are preferably added.

The influence of the particles smaller than 63 µm on the properties of the finished product is then negligible, as a result of which a product with specific properties can always be formed in a reproducible manner. If desired, it is, of course, possible to add separately to the still fluid slurry containing the hardenable composition a specific quantity of mineral aggregates smaller than 63 µm which are obtained by, for example, brushing.

The quantity added will, however, always be smaller than the quantity usually present in a hardenable building material such as asphalt or concrete, and serves only to vary the properties of the finished material by changing the specific surface area of the aggregates used.

The invention is explained in greater detail below with reference to two examples and a number of suitable brush devices.

The appended drawing shows a number of brush devices which can be used according to the invention. Although the brush devices shown are not the only conceivable ones, and other embodiments are also possible, it is preferable for the brushes present to engage in each other in such a way that the particles to be treated are prevented from coming into contact with each other or parts of the brush device in such a way that the particles break or crumble. The particles to be treated should therefore preferably be in the fluidized state.

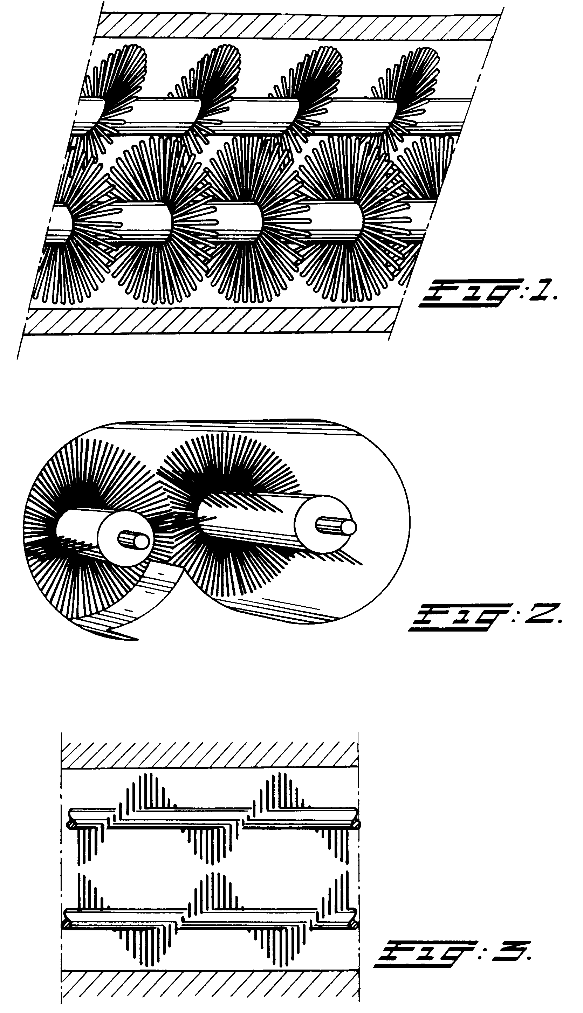

In the embodiment shown in Fig. 1 the brush device comprises two longitudinal shafts provided with brushes, in which the brushes are fitted on each shaft in a star shape with a certain distance between each star, and the brushes of the two longitudinal shafts are also placed intermittently and at an obtuse angle relative to each other.

In the embodiment shown in Fig. 2 the brushes are fitted alternately in the lengthwise direction and at right angles thereto on the shafts of the brush device.

The embodiment shown in Fig. 3 is a particularly expedient form, in which the brushes are fitted on the longitudinal shafts, forming a screw.

### EXAMPLE I

Mineral aggregates with dimensions up to about 40 mm are treated in a brush device of the type shown in Fig. 3, and on discharge one obtains, on the one hand, a fraction with particles of which the percentage of particles smaller than 63 µm is approximately 0.9% and, on the other, a fraction with particles essentially comprising particles larger than about 63 µm. According to an expedient embodiment, the fraction of particles smaller than 63 µm is extracted using a filter, or it is removed using a wire gauze.

The fraction of particles with dimensions larger than 63 µm can in particular be used as an aggregate in concrete or asphalt in order to obtain a product with properties lying within accurately defined limits. Asphalt thus formed will not break, for example through thawing after freezing.

It is pointed out that the fraction of particles with dimensions smaller than 63 µm can also be added separately as a filler if desired, for example if the already present high binder concentration necessitates a filling of particles with a larger specific surface area.

### EXAMPLE II

The lumps of stone obtained from the demolition of a chimney are pulverized until a material which has particle dimensions up to about 60 mm is obtained. These particles are treated in a brush device of the type shown in Fig. 3, and on discharge one obtains, on the one hand, a fraction with particles of which the percentage of particles smaller than 63 µm is approximately 0.8% and, on the other, a fraction with particles essentially comprising particles larger than about 63 µm. It has surprisingly been found that the pollution of polycyclic aromatic hydrocarbons present has collected in the fraction smaller than 63 µm, which fraction is extracted, as in Example I, using a filter.

## Claims

1. Method for the production of mineral aggregates in particle form by breaking, screening and removal of dust particles smaller than 63 µm adhering to the particles, characterized in that the particles smaller than 63 µm are essentially removed using brushing, preferably dry brushing.

2. Method according to claim 1, characterized in that the particles are brushed until less than 3% particles smaller than 63 µm, preferably less than 1%, are present.

3. Method according to claim 1 or 2, characterized in that the brushing is carried out in such a way that the mineral aggregates are in a fluidized state.

4. Method according to claims 1 to 3, characterized in that organic compounds adhering to the particles, in particular polycyclic aromatic hydrocarbons, are removed by brushing.

## Patentansprüche

1. Verfahren zur Herstellung von Mineralzuschlägen in Teilchenform durch Zerkleinern, Sieben und Entfernen von an den Teilchen anhaftenden Staubteilchen, die kleiner sind als 63 µm, dadurch gekennzeichnet, daß die Teilchen, die kleiner sind als 63 µm, im wesentlichen durch Bürsten, vorzugsweise Trockenbürsten, entfernt werden.

2. Verfahren nach Anspruch 1, dadurch gekennzeichnet, daß die Teilchen gebürstet werden, bis weniger als 3 %, vorzugsweise weniger als 1 % Partikel, die kleine- sind als 63 µm, vorhanden sind.

3. Verfahren nach Anspruch 1 oder 2, dadurch gekennzeichnet, daß das Bürsten in der Weise durchgeführt wird, daß die Mineralzuschläge sich in einem fluidisierten Zustand befinden.

4. Verfahren nach den Ansprüchen 1 bis 3, dadurch gekennzeichnet, daß an den Teilchen anhaftende organische Verbindungen, insbesondere polycyklische aromatische Kohlenwasserstoffe, durch Bürsten entfernt werden.

## Revendications

1. Procédé de production de granulats minéraux sous forme de particules en brisant, en tamisant, et en enlevant les particules de poussière plus petites que 63 µm adhérant aux particules, caractérisé en ce que les particules plus petites que 63 µm sont essentiellement enlevées par brossage, de préférence brossage à sec.

2. Procédé selon la revendication 1, caractérisé en ce que les particules sont brossées jusqu'à ce qu'il ne reste que moins de 3% de particules plus petites que 63 µm, de préférence moins de 1%.

3. Procédé selon la revendication 1 ou la revendication 2, caractérisé en ce qu'on effectue le brossage de telle manière que les granulats sont dans un état fluidisé.

4. Procédé selon les revendications 1 à 3, caractérisé en ce que les composés organiques adhérant aux particules, en particulier les hydrocarbures aromatiques polycycliques, sont enlevés par brossage.
